**Europäisches Patentamt**

(19) **European Patent Office**

**Office européen des brevets**

(11) Veröffentlichungsnummer: **0 015 622**
**B1**

(12) # EUROPÄISCHE PATENTSCHRIFT

(45) Veröffentlichungstag der Patentschrift:
**13.04.83**

(51) Int. Cl.³: **A 22 C 11/02**

(21) Anmeldenummer: **80200205.5**

(22) Anmeldetag: **04.03.80**

(54) Verfahren zum vorbereitenden Behandeln von gerafften Kunstdarmhüllen.

(30) Priorität: **05.03.79 DE 2908496**

(43) Veröffentlichungstag der Anmeldung:
**17.09.80 Patentblatt 80/19**

(45) Bekanntmachung des Hinweises auf die Patenterteilung:
**13.04.83 Patentblatt 83/15**

(84) Benannte Vertragsstaaten:
**AT CH DE FR GB IT NL SE**

(56) Entgegenhaltungen:
**EP-A-0 004 013**
**CH-A-231 052**
**CH-A-598 766**
**US-A-1 484 741**
**US-A-3 399 423**
**US-A-3 451 827**
**US-A-3 790 685**

(73) Patentinhaber: **Niedecker, Herbert, Dipl.-Ing., Am Ellerhang 6, D-6240 Königstein 2 (DE)**

(72) Erfinder: **Niedecker, Herbert, Dipl.-Ing., Am Ellerhang 6, D-6240 Königstein 2 (DE)**

(74) Vertreter: **Fischer, Ernst, Dr., Reuterweg 14, D-6000 Frankfurt am Main 1 (DE)**

Verfahren zum vorbereitenden Behandeln von gerafften Kunstdarmhüllen

Die Erfindung bezieht sich auf ein Verfahren zum vorbereitenden Behandeln von zu Raupen gerafften Kunstdarmhüllen bei der Wurstherstellung.

Insbesondere bei der Verpackung von Wurstwaren ist es bekannt, Kunstdarmhüllen oder Kunstdärme zu Raupen zu raffen und auf das Füllrohr einer Füllmaschine aufzuziehen. Der Kunstdarm wird sodann abschnittsweise mit der Wurstmasse gefüllt, abgeteilt sowie anschließend von einer Verschließmaschine verschlossen.

Vor dem Aufziehen auf das Füllrohr ist es jedoch in aller Regel erforderlich, den Kunstdarm vorzubehandeln, um ihn für das nachfolgende Füllen und Verschließen geeignet zu machen. Meist besteht dieses Vorbehandeln in einem Wässern, das sich mit der gegebenenfalls in der Kunstdarmfabrik bereits vorgenommenen Behandlung des Kunstdarms, z. B. mit Glycerin oder anderen chemischen Mitteln, ergänzen kann. Das Wässern ist insbesondere deshalb erforderlich, weil die Kunstdärme im trockenen Zustand, d. h. im Anlieferungszustand, einen kleineren Durchmesser als im feuchten Zustand haben. Ohne Wässern würde sich der trockene Kunstdarm daher nach Einbringen der feuchten Füllmasse dehnen, so daß die erzeugte Wurst alsbald erschlaffen und unansehnlich werden würde.

Das deshalb durchzuführende Wässern des Kunstdarmes wird oft auch gleichzeitig zum Ausspülen von chemischen Mitteln, beispielsweise vom erwähnten Glycerin, herangezogen, die dem Kunstdarm zur Konservierung zugesetzt werden.

Die bisherigen Verfahren zum Wässern oder Befeuchten von Kunstdärmen sind zeitaufwendig und vor allem nicht zuverlässig reproduzierbar. Die gerafften Kunstdarmhüllen werden hiernach etwa 20 Minuten lang in einem Wasserbad bei einer Temperatur von etwa 40°C gehalten. Da das Wässern meist in einfachen Wasserbehältern durchgeführt wird, hat sich gezeigt, daß diese Temperatur über einen längeren Zeitabschnitt nicht konstant gehalten werden kann. Auch wird das Wasser im Laufe der Zeit durch ab- und ausgewaschene Konservierungsmittel angereichert. Als Folge davon verschmutzen die den Kunstdärmen gegebenenfalls zugesetzten und nicht auszuwaschenden Gleitmittel. Die je nach Kunstdarmzusammensetzung beim Wässern erforderlichen Salzlösungen können überdies in ihrer Konzentration erheblich schwanken. Da erfahrungsgemäß die Wasserbehälter oftmals zum Spülen benutzter Geräte verwendet werden, besteht ein weiterer Nachteil darin, daß die zu wässernden Kunstdärme mit der abgewaschenen Wurstmasse in Berührung kommen.

Es sind daher weitere Verfahren und Vorrichtungen entwickelt worden, um die beim Vorbehandeln und Wässern von Kunstdärmen auftretenden Probleme auszuschalten und dabei den gesamten Herstellungsvorgang bis hin zur Verpackung weitgehend zu automatisieren. Dies ist bis auf das Füllen und Verschließen von Wursthüllen jedoch noch nicht in dem Maße vorangeschritten, daß eine hygienisch einwandfreie und zeitsparende Vorbehandlung von Kunstdarmhüllen und ein anschließendes Beschicken der Füllrohre einer Füllmaschine mit den gewässerten Kunstdarmhüllen durchführbar ist.

So ist aus der nicht vorveröffentlichten EP-A-0 004 103 bereits eine Anordnung zum Befüllen einer gerafften, schlauchförmigen Hülle mit einem Füllrohr bekannt, das eine Einrichtung zur gleichmäßig umfassenden Innenbeaufschlagung einer gerafften schlauchförmigen Wurstdarmhülle aufweist, wobei die Wurstdarmhüllen aus synthetischem, halbsynthetischem oder natürlichem Material bestehen. Diese Wässerungseinrichtung wird jedoch nur vor dem Füllvorgang betrieben.

In dem US-A-1 484 741 ist ein Verfahren beschrieben, wonach Wursthüllen beim Aufziehen auf ein Füllrohr mit einem Wasser- und einem Fleischdurchgang ohne aufgesetzte Darmbremse gespült und danach gefüllt werden. Auch dieses Verfahren läuft nur vor dem Füllvorgang ab.

Die Aufgabe der Erfindung besteht daher darin, ein Verfahren der eingangs genannten Art zu schaffen, mit dem eine hygienisch einwandfreie und schnelle Vorbehandlung von Kunstdarmhüllen bei der Nahrungsmittelverpackung möglich ist.

Diese Aufgabe wird erfindungsgemäß dadurch gelöst, daß die Kunstdarmhülle auf dem am Füllende mit einer Darmbremse gesicherten Füllrohr während des Füllvorgangs in ihrem zwischen Darmbremse und Füllmaschine gelegenen gerafften Abschnitt innen und/oder außen gleichmäßig umfassend mit einem wäßrigen Medium beaufschlagt wird.

Bei dem erfindungsgemäßen Verfahren wird also die Vorbehandlung der Kunstdarmhülle direkt an der Füllmaschine vorgenommen. Das wäßrige Medium, meist Wasser oder Naßdampf, mit einer Temperatur von mehr als 70°C, wird auf die Kunstdarmhülle — innen und/oder außen — gerichtet, so daß die Kunstdarmhülle nur mit sauberem Wasser in Berührung kommt. Nach dem Auffangen des benutzten Wassers und Reinigen kann es gegebenenfalls erneut zum Beaufschlagen der Hülle verwendet werden.

Es hat sich gezeigt, daß im Falle der Verwendung von Wasser als wäßriges Medium bei einer Temperatur von mehr als 70°C die übliche, in der Regel relativ kurze Verweilzeit der Kunstdarmhülle auf dem Füllrohr ausreicht, um zu dem angestrebten Ergebnis einer vollständigen Durchfeuchtung der Hülle sowie gegebenenfalls Reinigung von unerwünschten Konservierungsmitteln zu gelangen. Durch die Einbeziehung des Vorbehandlungsschrittes des Wässerns der Kunstdarmhülle in die Zeit des eigentlichen Füllvorganges wird die bisherige, vorherige gesonderte Bewässerung praktisch vollständig vermieden.

Erfindungsgemäß kann die Konditionierung des auf dem Füllrohr angeordneten Kunstdarmes noch dadurch gesteigert werden, daß die Beaufschlagung mit dem wäßrigen Medium unter erhöhtem Druck erfolgt. Schließlich liegt es auch im Rahmen der Erfindung, die Kunstdarmhüllen mit einem chemischen Mittel, z. B. Propylenglycol, vorzubehandeln. Das chemische Mittel wird dann durch das wäßrige Medium aktiviert, so daß die Bewässerungszeit erheblich verkürzt werden bzw. die Temperatur niedriger liegen kann.

Weitere Einzelheiten, Merkmale und Vorteile der Erfindung ergeben sich aus der folgenden Beschreibung mehrerer Ausführungsbeispiele, den Patentansprüchen sowie der schematischen Zeichnung. Hierbei zeigt

Fig. 1 einen Längsschnitt durch eine Ausführungsform der zur Durchführung des erfindungsgemäßen Verfahrens dienenden Vorrichtung, wobei ein Füllrohr mit seinem einen Ende an eine Füllmaschine angeschlossen ist, während an seinem anderen Ende gerade eine Wurst gefüllt wird,

Fig. 2 einen Schnitt nach Linie II-II des Gegenstands der Fig. 1,

Fig. 3 einen Längsschnitt durch eine modifizierte Ausführungsform des Gegenstands der Fig. 1,

Fig. 4 einen Längsschnitt durch ein Aufnahmerohr für eine zu einer Raupe geraffte Kunstdarmhülle,

Fig. 5 einen Längsschnitt durch weitere Ausführungsformen eines bei der Vorrichtung zur Verwendung gelangenden Füllrohres,

Fig. 6 einen Querschnitt nach Linie VI-VI der Fig. 5,

Fig. 7 einen Längsschnitt durch ein weiteres Aufnahmerohr entsprechend Fig. 4 und

Fig. 8 eine Stirnansicht einer Abschlußscheibe für das Aufnahmerohr nach Fig. 7.

In der Zeichnung sind verschiedene Ausführungsformen von Vorrichtungen zur Durchführung des erfindungsgemäßen Verfahrens dargestellt. In diesem Zusammenhang sei einleitend darauf hingewiesen, daß deshalb gleiche oder gleichartige Teile der Vorrichtungen mit gleichen Bezugszeichen versehen sind.

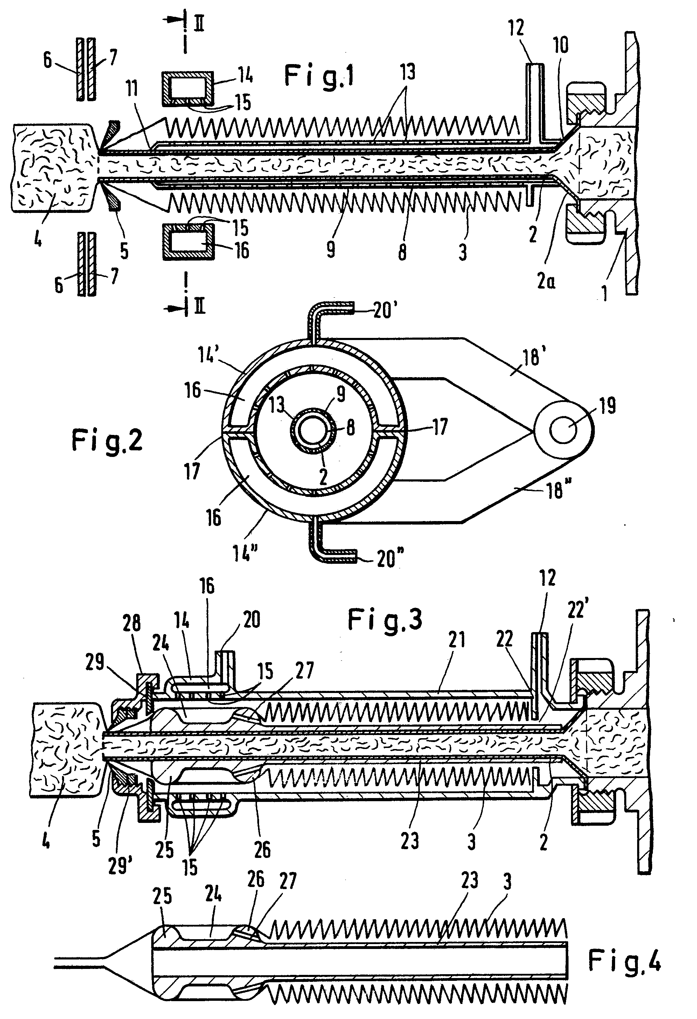

Gemäß Fig. 1 ist eine Auslaßöffnung 1 einer nicht näher dargestellten Füllmaschine mit einem Füllrohr 2 versehen. Die Füllmaschine gibt das beispielsweise in einer Kunstdarmhülle 3 zu verpackende Füllgut 4 portionsweise durch das Füllrohr in die Kunstdarmhülle ab. Entsprechend den herzustellenden Portionen erfolgt in bekannter Weise ein Einschnüren der Kunstdarmhülle 3 am Ende des Füllrohres 2 im Bereich einer Darmbremse 5 mittels Verschließorganen, beispielsweise Verdrängerscherenpaaren 6, 7. Nach dem derartigen Unterteilen in Portionen und einer Zopfbildung mit der füllgutfreien Kunstdarmhülle 3 werden noch Verschlußklammern gesetzt.

Das Füllrohr 2 ist an der Auslaßöffnung 1 der Füllmaschine befestigt. Es ist zunächst mit einem in der Regel konzentrisch auf ihm unter Bildung eines Ringraumes 8 vorgesehenen Außenrohres 9 versehen, welches im Bereich 10 am konischen Anschlußflansch 2a des Füllrohres 2 und im Bereich 11 am gegenüberliegenden Ende des Füllrohres 2 fest und flüssigkeitsdicht mit diesem verbunden ist.

Das Außenrohr 9 weist einen Einlaß 12 sowie mehrere Auslaßöffnungen 13 auf. Ist nun die geraffte Kunstdarmhülle 3 auf dem Füllrohr 2, d. h. auf dessen Außenrohr 9, aufgezogen, so erfolgt eine Innenbeaufschlagung der Kunstdarmhülle 3 mit dem durch den Einlaß 12 zugeführten wäßrigen Medium, beispielsweise mit erhitztem Wasser mit oder ohne Salzlösung oder mit Naßdampf. Dieses Medium gelangt vom Einlaß 12 über den Ringraum 8 durch die Öffnungen 13 auf die Innenseite der aufgezogenen, gerafften Kunstdarmhülle 3.

Neben dieser Einrichtung zur Innenbeaufschlagung ist bei dem Ausführungsbeispiel noch eine Einrichtung zur Außenbeaufschlagung der gerafften Kunstdarmhülle 3 vorgesehen. Diese besteht im wesentlichen aus einer Ringdüse 14, die auf der der Kunstdarmhülle 3 zugewandten Seite mit einzelnen Düsen 15 versehen ist. Über den Ringraum 16 zugeführtes wäßriges Medium wird somit über die Düsen 15 auf die Außenseite der Kunstdarmhülle 3 aufgesprüht oder aufgespritzt.

In aller Regel ist das über die Ringdüse 14 zugeführte wäßrige Medium mit dem wäßrigen Medium für die Innenbeaufschlagung identisch, wiederum also erhitztes Wasser mit oder ohne Salzlösung oder Naßdampf. Allerdings können über die Ringdüse 14 und die Einrichtung zur Innenbeaufschlagung auch unterschiedliche wäßrige Medien aufgebracht werden. Weiterhin ist es möglich, die geschilderte Einrichtung zur Innenbeaufschlagung und die zur Außenbeaufschlagung einzeln anzubringen oder zu betreiben, also entweder nur die Einrichtung zur Innenbeaufschlagung oder nur die zur Außenbeaufschlagung.

Das zum Einsatz gelangende wäßrige Medium kann über den Ringraum 8 des Füllrohres 2 sowie den Ringraum 16 der Ringdüse 14 in dosierter Menge, vorgegebener Temperatur und vorgegebenem Druck zugeführt werden. Die bereits erwähnte Darmbremse 5 sorgt hierbei nicht nur für den gewünschten Ablauf der Kunstdarmhülle 3, sondern dient gleichzeitig auch zum Abstreifen des verwendeten wäßrigen Mediums.

Werden innenbeschichtete Faserdärme als Kunstdarmhülle 3 verwendet, die innen keine Feuchtigkeit aufnehmen und nur von außen mit wäßrigem Medium beaufschlagt werden, so kann ein außen beschichtetes Füllrohr 2 verwendet werden, mit dem eine Wärmeisolation zwischen dem Füllgut 4 und dem erhitzten wäßrigen Medium erreicht wird. Dadurch kann bei bestimmtem Füllgut, z. B. Rohwurstbrät, eine nicht erwünschte Erwärmung und somit ein Schmieren vermieden werden. Das Beschichtungsmaterial ist deshalb vorzugsweise ein schlechter Wärmeleiter, z. B. Polytetrafluoräthylen oder dergleichen.

Fig. 2 zeigt einen Schnitt nach Linie II-II der Fig. 1 zur Darstellung einer geteilt ausgeführten Ringdüse 14. Sie weist hierbei ein Oberteil 14′ und Unterteil 14″ auf. Die Ebene 17 ist die Teilungsebene. Oberteil 14′ und Unterteil 14″ sind an je einem Arm 18′ bzw. 18″ befestigt und hiermit um eine Achse 19 verschwenkbar, d. h. auseinanderklappbar. Auf diese Weise kann die Ringdüse 14 beim Aufziehen einer neuen gerafften Kunstdarmhülle 3 auf das Füllrohr 2 zur Erleichterung des Aufziehens geöffnet werden. Die Zufuhr des wäßrigen Mediums zum Ober- und Unterteil 14′, 14″ erfolgt über Anschlüsse 20′ bzw. 20″.

In der Fig. 3 ist eine abgewandelte Ausführungsform des in der Fig. 1 dargestellten Grundprinzips der erfindungsgemäßen Vorrichtung gezeigt. Hierbei ist die Ringdüse 14 einstückig mit einem als Bewässerungsrohr ausgebildeten Gehäuse 21 versehen. Dieses Gehäuse 21 umgibt die auf dem Füllrohr 2 angeordnete Kunstdarmhülle 3. Bei diesem Ausführungsbeispiel erfolgt die Außenbeaufschlagung in der gleichen Weise wie beim Ausführungsbeispiel nach Fig. 1 und 2, also über die Ringdüse 14 mit ihren Düsen 15. Die Zufuhr des wäßrigen Mediums zur Ringdüse 14 erfolgt über den Einlaß oder Anschluß 20.

Das Bewässerungsrohr oder Gehäuse 21 weist wiederum einen Einlaß 12 für die Innenbeaufschlagung der Kunstdarmhülle 3 auf. Hierbei ist noch eine Trennwand 22 am Gehäuse 21 derart vorgesehen, daß um das Füllrohr 2 herum ein vergleichsweise enger Ringspalt 22′ verbleibt, durch den das am Einlaß 12 eintretende wäßrige Medium für die Innenbewässerung, vorzugsweise zwischen Kunstdarmhülle 3 und Füllrohr 2, zur Innenbeaufschlagung der Kunstdarmhülle 3 eintritt.

Die Ausführungsform nach Fig. 3 weist gegenüber der nach Fig. 1 noch den weiteren Unterschied auf, daß die Kunstdarmhülle 3 nicht direkt auf dem Füllrohr 2, sondern auf einem Aufnahmerohr 23 angeordnet ist, welches auf das Füllrohr 2 aufschiebbar ist. Dieses Aufnahmerohr 23 ist in Fig. 4 nochmals mit aufgezogener Kunstdarmhülle 3 gezeigt. Es ist mit einer Reckzone 24 für die Kunstdarmhülle 3 versehen. Die Reckzone 24 wird aus zwei mit Abstand zueinander angeordneten Wülsten 25 und 26 gebildet, wobei der dem zuströmenden wäßrigen Medium zur Innenbeaufschlagung zugewandte Wulst 26 mit Bohrungen 27 versehen ist, durch die dieses wäßrige Medium auch im Bereich der Reckzone 24 unter die Kunstdarmhülle 3 gelangen kann.

Bei der Ausführungsform nach Fig. 3 ist das Gehäuse 21 im Bereich der Verschließorgane mit einem abschwenkbaren Verschließteil 28 versehen, so daß eine im wesentlichen flüssigkeitsdichte Abdichtung des Gehäuses 21 gegeben ist. Das verschwenkbare Verschließteil 28 nimmt nicht nur die Darmbremse 5, sondern auch eine Abdichtmembran 29 auf, mit der das wäßrige Medium im wesentlichen im Gehäuse 21 zurückgehalten wird. Im abgeschwenkten Zustand des Verschließteiles 28 ist das Gehäuse 21 zur Aufnahme der gerafften Kunstdarmhülle 2 oder des Aufnahmerohres 23 mit der darauf angeordneten Kunstdarmhülle 3 offen. Schließlich ist in dem Verschließteil 28 noch eine Einstellmutter 29′ für die Darmbremse 5 vorhanden. Zu diesem Zwecke ist das Verschließteil 28 mit einem Innengewinde versehen.

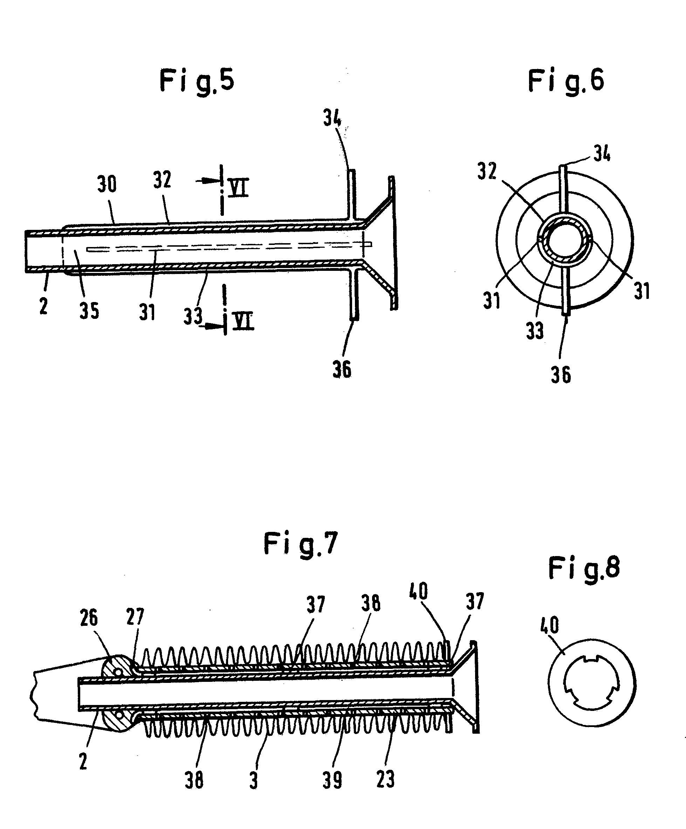

Fig. 5 und 6 zeigen ein Füllrohr 2 für solche Nahrungsmittel, beispielsweise spezielle Wurstsorten, deren Brät nicht erwärmt werden darf und bei denen es also gilt, eine Wärmezufuhr durch das erhitzte wäßrige Medium tunlichst zu vermeiden. Zu diesem Zweck ist das Füllrohr 2 nach Fig. 5 und 6 doppelwandig ausgebildet. Ein Außenmantel 30 umgibt wiederum konzentrisch das Füllrohr 2. Der so gebildete Innenraum ist durch zwei Stege 31 in eine obere Kammer 32 und eine untere Kammer 33 aufgeteilt. Das Kühlmittel, wie gekühltes Wasser, wird durch einen Einlaß 34 zugeführt, fließt durch die obere Kammer 32 bis zum Übergang 35, sodann durch die untere Kammer 33 und tritt am Auslaß 36 wieder aus.

Wie in der Fig. 7 dargestellt ist, kann das Aufnahmerohr 23 auch so ausgebildet sein, daß es einen Ringraum 39 mit dem Füllrohr 2 einschließt, um auf diese Weise zur Innenbeaufschlagung der Kunstdarmhülle 3 beizutragen. Zu diesem Zwecke sind einmal Distanzstege 37 am Füllrohr 2 vorgesehen. Außerdem weist das Aufnahmerohr 23 eine Anzahl von Öffnungen 38 auf, durch die das entsprechend Fig. 3 zugeleitete wäßrige Medium zur Innenbeaufschlagung vom Ringraum 39 zur Innenseite der Kunstdarmhülle 3 strömt. Auf dem der Füllmaschine zugewandten Ende des Aufnahmerohres 23 ist eine Abschlußscheibe 40 gemäß Fig. 8 lösbar angebracht, mit der die Kunstdarmhülle 3 gegen Abrutschen gesichert ist.

Gemäß Fig. 7 ist die Wulst 26 des Aufnahmerohres 23 wiederum mit einer Bohrung oder Ausnehmung 27 versehen, über die das wäßrige Medium des Ringraumes 39 auch auf die Außenseite der Kunstdarmhülle 3 strömen kann.

## Patentansprüche

1. Verfahren zum vorbereitenden Behandeln von zu Raupen gerafften Kunstdarmhüllen bei der Wurstherstellung, dadurch gekennzeichnet, daß die Kunstdarmhülle auf dem am Füllende mit einer Darmbremse (5) gesicherten Füllrohr (2) während des Füllvorgangs in ihrem zwischen Darmbremse (5) und Füllmaschine (1) gelegenen gerafften Abschnitt innen und/oder außen gleichmäßig umfassend mit einem wäßrigen Medium beaufschlagt wird.

2. Verfahren nach Anspruch 1, dadurch gekennzeichnet, daß die Beaufschlagung bei einer Temperatur von über 70°C erfolgt.

3. Verfahren nach Anspruch 1 oder 2, dadurch gekennzeichnet, daß als wäßriges Medium Wasser verwendet wird.

4. Verfahren nach mindestens einem der Ansprüche 1 bis 3, dadurch gekennzeichnet, daß die Beaufschlagung unter erhöhtem Druck erfolgt.

5. Verfahren nach mindestens einem der Ansprüche 1 bis 4, dadurch gekennzeichnet, daß die Kunstdarmhülle mit einem chemischen Mittel vorbehandelt wird.

## Claims

1. A process for the preparatory treatment of synthetic sausage casings which have been gathered to a caterpillarlike shape in the making of sausages, characterized in that the synthetic sausage casing is fitted on the filling tube (2), which at its filling end is provided with a casing snubber, and an aqueous fluid is applied during the filling operation to the inside and/or outside of the synthetic sausage casing in that gathered portion thereof which is disposed between the casing snubber (5) and the filling machine (1) and said aqueous fluid is uniformly distributed in a uniformly distribution around the periphery.

2. A process according to claim 1, characterized in that the application is effected at a temperature above 70°C.

3. A process according to claim 1 or 2, characterized in that water is used as an aqueous fluid.

4. A process according to any of claims 1 to 3, characterized in that the application is effected under superatmospheric pressure.

5. A process according to any of claims 1 to 4, characterized in that the synthetic sausage casing is pretreated with a chemical agent.

## Revendications

1. Procédé de traitement préparatoire de boyaux artificiels pliés en accordéon pour la fabrication de saucisses, caractérisé en ce qu'il consiste à projeter pendant le processus de remplissage un milieu aqueux d'une manière uniforme tout autour à l'intérieur et/ou à l'extérieur du tronçon de boyau synthétique plié en accordéon interposé entre un frein de boyau (5), qui assujettit l'extrémité de remplissage du boyau synthétique à un tube de remplissage (2), et une machine de remplissage (1).

2. Procédé suivant la revendication 1, caractérisé en ce qu'il consiste à effectuer la projection à une température supérieure à 70°C.

3. Procédé suivant la revendication 1 ou 2, caractérisé en ce qu'il consiste à utiliser de l'eau comme milieu aqueux.

4. Procédé suivant l'une au moins des revendications 1 à 3, caractérisé en ce qu'il consiste à effectuer la projection sous pression élevée.

5. Procédé suivant l'une au moins des revendications 1 à 4, caractérisé en ce qu'il consiste à traiter au préalable le boyau artificiel par un agent chimique.

0 015 622

Fig.1

Fig.2

Fig.3

Fig.4

7

## Fig.5

## Fig.6

## Fig.7

## Fig.8